# EUROPÄISCHE PATENTSCHRIFT

(11) **EP 3 407 035 B1**
(45) Veröffentlichungstag und Bekanntmachung des Hinweises auf die Patenterteilung: **07.08.2019**
(21) Anmeldenummer: 17172984.1
(22) Anmeldetag: 26.05.2017
(51) Int. Cl.: G01J 1/42, G01J 1/44

(54) **MESSVORRICHTUNG UND VERFAHREN ZUR MESSUNG DER INTENSITÄTSVERTEILUNG EINFALLENDER LICHTSTRAHLUNG**
MEASURING DEVICE AND METHOD FOR MEASURING THE INTENSITY DISTRIBUTION OF INCIDENT LIGHT RADIATION
DISPOSITIF DE MESURE ET PROCÉDÉ DE MESURE DE LA RÉPARTITION DE L'INTENSITÉ D'UN RAYON DE LUMIÈRE INCIDENTE

(43) Veröffentlichungstag der Anmeldung: 28.11.2018
(73) Patentinhaber: Fraunhofer-Gesellschaft zur Förderung der angewandten Forschung e.V., 80686 München (DE)
(72) Erfinder: Turek, Marko, 06108 Halle (DE); Hagendorf, Christian, 06108 Halle (Saale) (DE); Probst, Leonhard, 79104 Freiburg i.Br. (DE)
(74) Vertreter: Gagel, Roland

(56) Entgegenhaltungen:
- EP-A1- 2 824 434
- JP-A- 2007 042 999

## Beschreibung

### Technisches Anwendungsgebiet

Die vorliegende Erfindung betrifft eine Messvorrichtung sowie ein Verfahren zur Messung der Intensitätsverteilung einfallender Lichtstrahlung mit einer Sensoranordnung aus mehreren Zeilen und Spalten von lichtsensitiven Sensoreinheiten, die jeweils eine als Sensorelement dienende Solarzelle und einen vorderseitigen und einen rückseitigen elektrischen Kontakt zum Anlegen einer elektrischen Spannung an die Solarzelle aufweisen, und einer Messelektronik, mit der ein bei Anlegen einer elektrischen Spannung durch die Solarzelle fließender Strom gemessen werden kann, aus dem eine auf die jeweilige Sensoreinheit auftreffende Lichtintensität berechenbar ist.

Viele messtechnische Einrichtungen basieren auf der Beleuchtung eines Prüfkörpers und dem gleichzeitigen Vermessen optischer, elektrischer, elektrooptischer, chemischer oder anderer physikalischer Eigenschaften des Prüfkörpers im beleuchteten Zustand. So werden z.B. in Sonnensimulatoren Solarzellen oder Solarmodule hinsichtlich ihrer maximalen Leistung bzw. Konversionseffizienz vermessen. Für eine hohe Messgenauigkeit und -wiederholbarkeit ist eine lateral homogene Intensitätsverteilung der Lichtstrahlung in der Prüfebene erforderlich, im Folgenden auch als räumlich homogenes Lichtfeld bezeichnet. Im Bereich der photovoltaischen Anwendungen sind die Homogenitätsanforderungen in der Norm IEC 60904 festgelegt.

Je nach Anwendungsgebiet stellt die Überwachung und Kontrolle der Homogenität der Lichtfelder in der Prüfebene unterschiedliche Anforderungen, die im Folgenden beispielhaft anhand der Anwendung bei Sonnensimulatoren zur Prüfung von Solarzellen oder Solarmodulen angeführt werden. So ist für Präzisionsmessungen in derartigen Sonnensimulatoren ein Messsensor erforderlich, der in seinen geometrischen Abmessungen, d.h. laterale Dimensionen (Länge/Breite) und Dicke, und den verwendeten Materialien die wesentlichen geometrischen und optischen Eigenschaften der zu vermessenden Solarzellen oder Solarmodule möglichst identisch abbildet. Der Aufbau des Messsensors sollte daher möglichst analog zum Aufbau von Photovoltaik- bzw. Solarmodulen sein. Da in Sonnensimulatoren häufig Blitzlichter mit Pulsdauern im Millisekundenbereich eingesetzt werden, muss der Messsensor über die komplette Prüfebene in entsprechend kurzer Zeit auslesbar sein.

### Stand der Technik

Zur Vermessung der Intensitätsverteilung einfallender Lichtstrahlung in einer Messfläche ist es bekannt, einen einzelnen, lichtsensitiven Sensor an verschiedene Positionen der Messfläche zu bringen und an diesen Positionen jeweils die lokale Lichtintensität zu messen. Hierbei muss der Messvorgang nach jeder neuen Positionierung des Sensors wiederholt werden. Diese Vorgehensweise erfordert eine mechanische Vorrichtung zur Bewegung und Positionierung des Sensors und ist entsprechend zeitaufwändig.

Aus der US 6 441 896 A1 ist eine Messvorrichtung sowie ein Verfahren zur Messung der Intensitätsverteilung einfallender Lichtstrahlung bekannt, die eine zeilen- und spaltenweise Anordnung lichtsensitiver Sensoreinheiten für die Messung nutzen. Als Sensoreinheiten werden in dieser Druckschrift auch Solarzellen vorgeschlagen. Bei dieser Messvorrichtung ist jede Sensoreinheit separat mit einem Signalprozessor und der Messelektronik verbunden. Aufgrund dieser aufwändigen Verschaltung aller einzelnen Sensoreinheiten kann eine derartige Messvorrichtung bei einer Anwendung zur Messung in Sonnensimulatoren für Solarmodule nicht mit den üblichen Modulaufbauten realisiert werden. Damit kann keine so hohe Messgenauigkeit bezüglich dieser Anwendung erreicht werden als bei Messvorrichtungen, die den üblichen Modulaufbauten entsprechen oder nahe kommen. Weiterhin lässt sich eine derartige Messvorrichtung auch nicht in einfacher Weise unter Beibehaltung der Flächendichte der Sensoren zu größeren Messflächen hin skalieren.

Aus der EP 1 577 651 A1 ist eine Messvorrichtung zur Funktionskontrolle von Sendern im infraroten Bereich bekannt, mit der insbesondere die Intensitätsverteilung von Infrarot-Scheinwerfern von Kraftfahrzeugen vermessen werden kann. Bei dieser Messvorrichtung wird ein einzelnes großflächiges Photovoltaik-Element als Messsensor eingesetzt. Das Photovoltaik-Element wird mit einer Maske abgedeckt, die eine lokale Öffnung aufweist. Durch Verschieben der Maske über dem Photovoltaik-Element kann die Intensitätsverteilung des Scheinwerfers in der Fläche des Photovoltaik-Elementes vermessen werden.

Die EP 2 824 434 A1 beschreibt eine Anordnung zur Kalibrierung eines Sonnenlichtsimulators für Solarzellen, bei der eine Sensoranordnung mit mehreren photovoltaischen Elementen zum Einsatz kommt. Bei dieser Anordnung sind die elektrischen Kontakte an den einzelnen Elementen über einen analogen Multiplexer mit einer Messeinrichtung verbunden.

Die JP 2007 042999 A beschreibt eine Anordnung zur Messung der Intensitätsverteilung eines Sonnensimulators, die ebenfalls ein Array von Sensorelementen aufweist. Die Sensorelemente werden dabei jeweils über Schalter mit einer Messeinrichtung verbunden.

Die Aufgabe der vorliegenden Erfindung besteht darin, eine Messvorrichtung sowie ein Verfahren zur Messung der Intensitätsverteilung einfallender Lichtstrahlung in einer Messfläche anzugeben, die sich für die Vermessung der Intensitätsverteilung eines Sonnensimulators für Solarzellen oder Solarmodule in der Prüfebene eignen und eine einfache Skalierbarkeit hinsichtlich der Größe der Messfläche ermöglichen. Die Messvorrichtung und das Verfahren sollen dabei insbesondere eine Messung der Homogenität der Intensitätsverteilung bzw. des Lichtfeldes der einfallenden Lichtstrahlung in einer Messebene ermöglichen.

### Darstellung der Erfindung

Die Aufgabe wird mit der Messvorrichtung und dem Verfahren gemäß den Patentansprüchen 1 und 10 gelöst. Vorteilhafte Ausgestaltungen der Messvorrichtung sowie des Verfahrens sind Gegenstand der abhängigen Patentansprüche oder lassen sich der nachfolgenden Beschreibung sowie den Ausführungsbeispielen entnehmen.

Die vorgeschlagene Messvorrichtung verfügt über eine Sensoranordnung aus mehreren Zeilen und Spalten von lichtsensitiven Sensoreinheiten, die jeweils eine als Sensorelement dienende Solarzelle und einen vorderseitigen und einen rückseitigen elektrischen Kontakt zum Anlegen einer elektrischen Spannung an die Solarzelle aufweisen. Die Begriffe Zeile und Spalte sind hierbei lediglich zur Unterscheidung zwischen den beiden Achsen der Matrix von Sensoreinheiten zu verstehen und haben keine weitergehende Bedeutung, so dass im Folgenden die Spalten auch als Zeilen bezeichnet werden könnten und umgekehrt. Die Begriffe der Vorderseite und der Rückseite beziehen sich auf die Einfallsrichtung der zu vermessenden Lichtstrahlung. Die vorderseitigen Kontakte sind auf der Seite der einfallenden Lichtstrahlung, die rückseitigen Kontakte auf der von dieser abgewandten Seite angeordnet. Die Messvorrichtung verfügt weiterhin über eine Messelektronik, mit der durch Anlegen einer elektrischen Spannung ein durch die Solarzelle fließender Strom bei jeder als Sensorelement dienenden Solarzelle der Sensoreinheiten als Messwert gemessen werden kann. Vorzugsweise ist die Messelektronik so ausgebildet, dass sie die angelegte Spannung variieren und damit eine Strom-Spannungs-Charakteristik der jeweiligen Solarzelle messen kann. Aus diesem Messwert oder der gemessenen Strom-Spannungs-Charakteristik ist dann die auf die jeweilige Solarzelle bzw. Sensoreinheit auftreffende Lichtintensität berechenbar. Die vorgeschlagene Messvorrichtung zeichnet sich dadurch aus, dass jede Spalte der Sensoranordnung eine einzelne elektrische Verbindungsleitung aufweist, mit der die vorderseitigen elektrischen Kontakte der Sensoreinheiten dieser Spalte elektrisch verbunden sind, und jede Zeile der Sensoranordnung eine einzelne elektrische Verbindungsleitung aufweist, mit der die rückseitigen Kontakte der Sensoreinheiten dieser Zeile elektrisch verbunden sind. Die elektrischen Verbindungsleitungen sind jeweils mit der Messelektronik verbunden. Weiterhin ist in jeder Sensoreinheit ein als Diode wirkendes Bauelement zwischen der als Sensorelement dienenden Solarzelle und dem rückseitigen elektrischen Kontakt so verschaltet, dass es einen Stromfluss von der als Sensorelement dienenden Solarzelle in die mit den rückseitigen Kontakten verbundene elektrische Verbindungsleitung verhindert.

Die Sensoranordnung der vorgeschlagenen Messvorrichtung besteht somit aus einem Feld bzw. einer Matrix aus Sensoreinheiten, die jeweils eine Solarzelle als sensitives Element aufweisen. Durch die besondere zeilen- und spaltenweise Verschaltung kann über die Messelektronik eine elektrische Spannung an jede einzelne Solarzelle angelegt und die Strom-Spannungs-Charakteristik oder lediglich der Strom bei einer festen Spannung an der Solarzelle gemessen und daraus die auf die Solarzelle einfallende Lichtintensität berechnet werden. Die Berechnung erfolgt mit einer Datenauswerteeinrichtung, die entweder getrennt von der Messvorrichtung eingesetzt werden oder auch Bestandteil der Messvorrichtung sein kann. Durch die besondere Verschaltung der Solarzellen mit den als Diode wirkenden Bauelementen und lediglich einer Mess- bzw. Verbindungsleitung pro Zeile und pro Spalte der Sensoranordnung ist eine leichte Skalierbarkeit der Messvorrichtung möglich, da die Anzahl der Verbindungsleitungen nicht mit der Anzahl der Sensoreinheiten sondern lediglich mit der Anzahl der Spalten und Zeilen skaliert. Die relativ geringe Anzahl an Verbindungsleitungen zur Messelektronik ermöglicht auch einen Aufbau der Sensoranordnung, die dem Aufbau eines Solar- oder Photovoltaikmoduls entspricht oder zumindest nahe kommt. Die Abschattung der Solarzellen durch die vorderseitigen Verbindungsleitungen sind vernachlässigbar. Sowohl die laterale Ausdehnung als auch der gegenseitige Abstand der Sensoreinheiten kann in den Zeilen und Spalten variieren. So kann beispielsweise in einem zentralen Bereich der Sensoranordnung eine höhere Sensordichte und damit Auflösung erreicht werden als im äußeren Bereich.

Die Messvorrichtung ermöglicht die Messung der Homogenität einfallender Lichtstrahlung hinsichtlich der Intensitätsverteilung in der Messebene oder Messfläche, bspw. zur Quantifizierung der räumlichen Homogenität einer Lichtquelle. Dies gilt auch für eingeschränkte Spektralbereiche, die entweder durch die Lichtquelle selbst vorgegeben oder durch geeignete spektrale Filter über der Messvorrichtung eingestellt werden können. In gleicher Weise kann eine ortsaufgelöste Messung der Polarisation des Lichtes, die mittels Polarisationsfilter erreicht wird, erfolgen. Eine dritte Anwendung ist der Einsatz winkelabhängiger Filter, so dass auch der Einfallswinkel lateral aufgelöst gemessen werden kann. Mit der Messvorrichtung und dem zugehörigen Verfahren lässt sich auch die Homogenität optisch transparenter Materialien bzw. Objekte bestimmen, die zwischen der Lichtquelle und der Messvorrichtung positioniert werden. Dies erfordert lediglich die Kenntnis der Intensitätsverteilung der von der Lichtquelle auf das Material bzw. Objekt einfallenden Lichtstrahlung. Die Messvorrichtung und das zugehörige Verfahren ermöglichen schnelle Messungen des gesamten Lichtfeldes in der Messfläche, wie dies für die Vermessung von Blitzlampen, wie sie in Solarzell- und Solarmodulmessgeräten verwendet werden, erforderlich ist.

In einer vorteilhaften Ausgestaltung der vorgeschlagenen Messvorrichtung wird das als Diode wirkende Bauelement durch eine weitere Solarzelle gebildet, die in umgekehrter Orientierung unter der als Sensorelement dienenden Solarzelle angeordnet wird. Damit wird diese weitere Solarzelle durch die einfallende Lichtstrahlung nicht beleuchtet und wirkt somit als einfache Diode. Die daraus resultierende Sensoranordnung mit den Solarzellenstapeln aus jeweils zwei Solarzellen lässt sich in sehr flacher Bauweise realisieren, da Solarzellen deutlich dünner als 1 mm sind. Dies bietet den Vorteil, dass diese Sensoranordnung eine Messung in der Prüfebene von Sonnensimulatoren für Solarzellen und Solarmodule ermöglicht, ohne an deren Aufbau etwas ändern zu müssen. Die Beleuchtungsfläche derartiger Sonnensimulatoren ist vergleichsweise groß und variiert in den Abmessungen zwischen 0,2 und 2 m. Die vorgeschlagene Messvorrichtung weist einen einfach skalierbaren Aufbau auf, durch den die Sensoranordnung der Messvorrichtung in ihren lateralen Dimensionen ohne großen Aufwand an die jeweilige Anwendung angepasst werden kann.

Die vorgeschlagene Messvorrichtung erlaubt eine schnelle Bestimmung der Verteilung bzw. räumlichen Homogenität der Lichtintensität einfallender Lichtstrahlung ohne zusätzliche mechanische Bauelemente. Die Sensoranordnung der Messvorrichtung ist aufgrund des Matrixaufbaus beliebig in ihren lateralen Dimensionen (Länge und Breite) skalierbar. Damit sind basierend auf dem gleichen Schema Messaufbauten sowohl für Solarzellals auch für Solarmodulmessungen möglich. Es ist keine zusätzliche Verschaltung oder Elektronik zu integrieren, wodurch ein sehr flacher Aufbau der Sensoranordnung möglich ist. Für Anwendungen in der Photovoltaik kann die Sensoranordnung komplett aus Standardmodulmaterialien aufgebaut werden und gewährleistet somit, dass die Vermessung der einfallenden Lichtstrahlung bzw. des Lichtfeldes und nachfolgende elektrische Vermessung der Solarmodule unter identischen Bedingungen erfolgt.

Die Messelektronik ist bei der vorgeschlagenen Messvorrichtung so ausgebildet, dass sie durch Auswahl jeweils einer Verbindungsleitung einer Zeile und einer Verbindungsleitung einer Spalte eine elektrische Spannung an die als Sensorelement dienende Solarzelle der durch diese Auswahl adressierten Sensoreinheit anlegen und den Strom oder eine Strom-Spannungs-Charakteristik dieser Solarzelle messen kann. In einer einfachen Ausgestaltung ist die Messelektronik hierbei so ausgebildet, dass sie den Strom oder die Strom-Spannungs-Charakteristik aller als Sensorelement dienenden Solarzellen der Sensoranordnung nacheinander erfasst. In einer weiteren Ausgestaltung kann die Messelektronik auch ein Mehrkanalmesssystem aufweisen, mit dem der Strom oder die Strom-Spannungs-Charakteristik der als Sensorelement dienenden Solarzellen jeweils einer Zeile oder Spalte der Sensoranordnung gleichzeitig gemessen werden kann. Die einzelnen Zeilen oder Spalten werden dabei nacheinander vermessen. In einer weiteren Ausgestaltung kann die Messelektronik auch so ausgebildet sein, dass sie alle als Sensorelement dienenden Solarzellen der Sensoranordnung gleichzeitig vermisst, indem sie an jede dieser Solarzellen eine Anregungsspannung mit anderer Frequenzmodulation anlegt. Durch Auswertung dann erfassten modulierten Ströme können die einzelnen Solarzellen bzw. deren Positionen über die Modulation dann wieder identifiziert werden.

Das Messverfahren zur Messung der Intensitätsverteilung einfallender Lichtstrahlung besteht aus zwei Schritten. Im ersten Schritt werden die einzelnen Sensoreinheiten relativ zueinander mittels einer Lichtquelle bekannter Lichtintensitätsverteilung bzw. Uniformität vermessen. Dies kann bspw. mit Hilfe von Sonnenlicht erfolgen. Die so erhaltenen Normwerte werden gespeichert. Im zweiten Schritt wird dann die zu charakterisierende einfallende Lichtstrahlung vermessen und mit den Normwerten verglichen. Daraus lässt sich dann die Lichtintensitätsverteilung bzw. räumliche Homogenität der einfallenden Lichtstrahlung quantifizieren. Der erste Schritt muss dabei nicht bei jeder Messung neu durchgeführt werden. Vielmehr kann diese im ersten Schritt vorgenommene Erfassung von Normwerten auch nur einmalig oder in größeren Zeitabständen erfolgen, wobei dann bei jeder Messung auf diese abgespeicherten Normwerte zurückgegriffen wird.

Mit der vorgeschlagenen Messvorrichtung und dem zugehörigen Verfahren lassen sich lokale Unterschiede in der Intensität von Lichtfeldern bzw. einfallender Lichtstrahlung erfassen. Ein zentrales Anwendungsgebiet ist hierbei der normgerechte Test von Sonnensimulatoren für Solarzellen oder Solarmodule hinsichtlich der räumlichen Homogenität des Lichtfeldes. Dabei können sowohl Sonnensimulatoren für Zellmessungen als auch für Modulmessungen geprüft werden. Diese Prüfung ist entsprechend der Messnorm regelmäßig für alle in der Photovoltaik eingesetzten Sonnensimulatoren durchzuführen. Ebenso kann auch die räumliche Homogenität bzw. das Abstrahlprofil oder die Lichtintensitätsverteilung einer beliebigen anderen Lichtquelle quantifiziert werden. Ein Beispiel ist die Bestimmung der räumlichen Verteilung der Abstrahlintensität von Scheinwerfern, z. B. in Kraftfahrzeugen. Diese müssen in einer bestimmten Entfernung ein spezifisches, nicht homogenes Lichtprofil aufweisen. Die vorgeschlagene Messvorrichtung und das zugehörige Verfahren sind auch für die Vermessung eines derartigen Lichtprofils geeignet. Ein anderes Anwendungsgebiet ist die Prüfung der räumlichen Homogenität von großflächigen transparenten Objekten bzw. Materialien. Diese werden dann vor bzw. über der vorgeschlagenen Messvorrichtung angeordnet und die Lichtintensitätsverteilung einfallender Lichtstrahlung nach Durchtritt durch dieses Material bzw. Objekt gemessen. Die Auswertung erfordert dabei die Kenntnis der Lichtintensitätsverteilung der eingesetzten Lichtquelle. Diese Technik kann neben der Prüfung der lateralen Unterschiede in der Transmission einer flächigen Probe auch zur simultanen Prüfung der optischen Transmission vieler Einzelproben erfolgen. Die Einzelproben werden dazu nebeneinander auf die Sensoranordnung aufgelegt bzw. über der Sensoranordnung angeordnet. Die vorgeschlagene Messvorrichtung ist dadurch neben der Qualifizierung von Lichtquellen ebenso in der Materialprüfung einsetzbar, bspw. um die Homogenität der Transmission von optischen Materialien zu testen.

### Kurze Beschreibung der Zeichnungen

Die vorgeschlagene Messvorrichtung sowie das zugehörige Verfahren werden nachfolgend anhand eines Ausführungsbeispiels in Verbindung mit den Zeichnungen nochmals näher erläutert. Hierbei zeigen:
- Fig. 1: eine schematische Darstellung der elektrischen Verschaltung der vorgeschlagenen Messvorrichtung in einem Beispiel mit vier Sensoreinheiten; und
- Fig. 2: eine schematische Darstellung eines Beispiels der Sensoranordnung der vorgeschlagenen Messvorrichtung mit 16 Sensoreinheiten in Draufsicht (Teilabbildung A) und im Querschnitt (Teilabbildung B).

### Wege zur Ausführung der Erfindung

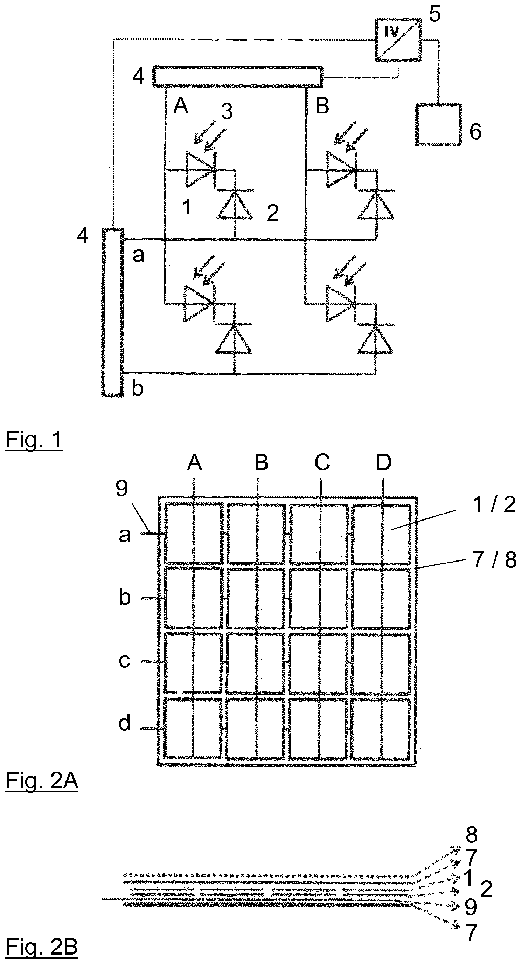

Figur 1 zeigt eine schematische Darstellung der Verschaltung der vorgeschlagenen Messvorrichtung für ein Beispiel mit lediglich vier Sensoreinheiten. Die Messvorrichtung besteht in diesem Beispiel aus der Sensoranordnung, einer Messelektronik 4, 5 und einer Datenverarbeitungseinheit 6, bspw. einem Computer. In der Sensoranordnung sind einzelne Solarzellen so verschaltet, dass entweder jeweils zwei Solarzellen übereinanderliegend oder eine Solarzelle zusammen mit einer Diode eine Sensoreinheit bzw. ein Matrixelement bilden. Bei Nutzung von zwei Solarzellen in einer Sensoreinheit ist dies derart realisiert, dass die als Sensorelement dienende Solarzelle 1 in Richtung der einfallenden Lichtstrahlung 3 zeigt, während die andere Solarzelle 2 in die entgegengesetzte Richtung zeigt und sich somit immer im Dunkelbetrieb befindet und somit eine Diode bildet. Alternativ kann diese zweite, unbeleuchtete Solarzelle 2 auch direkt durch eine Diode ersetzt werden. Die beiden miteinander verbundenen Solarzellen 1, 2 bzw. die als Sensorelement dienende Solarzelle 1 und die Diode bilden eine Sensoreinheit, von denen beliebig viele in einer Matrix angeordnet werden können. Hierbei werden alle oben liegenden, als Sensorelemente dienenden Solarzellen 1 in einzelnen Spalten (A, B, ...) verschaltet, während alle unten liegenden Solarzellen 2 bzw. die unten liegenden Dioden in einzelnen Zeilen (a, b, ...) verschaltet werden. Die Verschaltung erfolgt dabei derart, dass die vorderseitigen Kontakte jeder Sensoreinheit, die den vorderseitigen Kontakten der als Sensorelemente dienenden Solarzelle 1 entsprechen, über eine Verbindungsleitung mit den anderen Sensoreinheiten der jeweils gleichen Spalte und alle rückseitigen Kontakte der Sensoreinheiten über eine elektrische Verbindungsleitung mit den anderen Sensoreinheiten der jeweils gleichen Zeile verbunden sind. Jede Spalte und jede Zeile weist dabei jeweils eine Verbindungsleitung auf, die entsprechend der Figur 1 über ein Schaltelement 4 (als Teil der Messelektronik) mit der Messelektronik 5 verbunden sind. In der Figur 1 ist das Verschaltungsschema einer 2 x 2 Sensoranordnung dargestellt. Durch die Matrixanordnung ist eine Erweiterung auf beliebig viele Spalten und Zeilen möglich. So zeigt bspw. Figur 2A beispielhaft in Draufsicht eine 4 x 4 Sensoranordnung mit insgesamt 16 Sensoreinheiten. Ebenso ist die Größe der einzelnen Sensoreinheiten bzw. der darin als sensitives Element dienenden Solarzellen 1 beliebig ausführbar, so dass Lichtfelder zur Prüfung einzelner Solarzellen ebenso vermessen werden können wie größere Lichtfelder zur Prüfung kompletter Solarmodule.

In der Draufsicht der Figur 2A sind die oben liegenden (vorderseitigen) Verbindungsleitungen der Spalten der Sensoranordnung (A, B, ...) und auch die unten liegenden (rückseitigen) Verbindungsleitungen der Reihen der Sensoranordnung (a, b, ...) zu erkennen. Figur 2B zeigt diese Anordnung nochmals in schematischer Darstellung im Querschnitt, in dem die als Sensorelement dienenden Solarzellen 1 und die als Diode wirkenden Solarzellen 2 ebenso wie eine rückseitige Verbindungsleitung 9 einer Zeile der Sensoranordnung angedeutet sind. Die Sensoranordnung kann durch Lamination unter Verwendung von Standardmodulmaterialien 7, d.h. insbesondere entsprechende Einkapselungsfolien und ggf. ein Frontglas, in Modulform gebracht werden. Dies ist in der Figur 2B mit den Standardmodulmaterialien 7 schematisch angedeutet. Weiterhin ist es möglich, die Sensoranordnung mit Filtermaterialien 8 zu bedecken, so dass nur ein bestimmter Wellenlängenbereich, eine bestimmte Polarisation oder ein bestimmter Einfallswinkel der einfallenden Strahlung von der Messvorrichtung erfasst wird.

Die Sensoranordnung ist im Querschnitt der Figur 2B als ebene Anordnung dargestellt, kann aber auch in einer gewölbten Form realisiert werden.

Die Sensoranordnung ist an eine Messelektronik 5 angeschlossen, welche sukzessive den Strom oder die Strom-Spannung-Charakteristik zwischen jeweils einer Zeile und einer Spalte der Sensoranordnung messen kann und so die einzelnen Matrixelemente bzw. Sensoreinheiten analysiert. Alternativ kann mittels einer Mehrkanalmessung auch jeweils eine komplette Zeile oder Spalte gemessen werden. In einer weiteren Alternative ist eine Realisierung mittels eines Login-Verfahrens möglich, bei dem alle Matrixelemente bzw. Sensoreinheiten zeitgleich durch die Verwendung von Anregungsspannungen unterschiedlicher Frequenzmodulation vermessen werden.

Die Messelektronik ist mit der Datenauswerteeinheit 6 verbunden, welche die Messdaten mit hinterlegten Normwerten der einzelnen Matrixelemente bzw. Sensoreinheiten abgleicht und somit die Lichtintensität an den Positionen der einzelnen Sensoreinheiten berechnet.

### Bezugszeichenliste

- 1: Solarzelle als Sensorelement
- 2: Solarzelle als Diode
- 3: Lichtstrahlung
- 4: Schaltelement
- 5: Messelektronik
- 6: Datenauswerteeinheit
- 7: Standardmodulmaterial
- 8: Filtermaterial
- 9: rückseitige Verbindungsleitung

## Patentansprüche

1. Messvorrichtung zur Messung der Intensitätsverteilung einfallender Lichtstrahlung, mit einer Sensoranordnung aus mehreren Zeilen (a, b, c, d) und Spalten (A, B, C, D) von lichtsensitiven Sensoreinheiten, die jeweils eine als Sensorelement dienende Solarzelle (1) und einen vorderseitigen und einen rückseitigen elektrischen Kontakt zum Anlegen einer elektrischen Spannung an die Solarzelle (1) aufweisen, und einer Messelektronik (4, 5), mit der durch Anlegen einer elektrischen Spannung ein durch die Solarzelle (1) fließender Strom bei jeder als Sensorelement dienenden Solarzelle (1) der Sensoreinheiten gemessen werden kann,
**dadurch gekennzeichnet, dass**
- jede Spalte (A, B, C, D) der Sensoranordnung eine elektrische Verbindungsleitung aufweist, mit der die vorderseitigen elektrischen Kontakte der Sensoreinheiten dieser Spalte elektrisch verbunden sind,
- jede Zeile (a, b, c, d) der Sensoranordnung eine elektrische Verbindungsleitung (9) aufweist, mit der die rückseitigen Kontakte der Sensoreinheiten dieser Zeile elektrisch verbunden sind,
- die elektrischen Verbindungsleitungen der Zeilen (a, b, c, d) und der Spalten (A, B, C, D) der Sensoranordnung mit der Messelektronik (4, 5) verbunden sind, und
- in jeder Sensoreinheit ein als Diode wirkendes Bauelement (2) zwischen der als Sensorelement dienenden Solarzelle (1) und dem rückseitigen elektrischen Kontakt so verschaltet ist, dass es einen Stromfluss von der als Sensorelement dienenden Solarzelle (1) in die mit den rückseitigen Kontakten verbundene elektrische Verbindungsleitung (9) verhindert.

2. Messvorrichtung nach Anspruch 1,
**dadurch gekennzeichnet,**
**dass** das als Diode wirkende Bauelement (2) eine entgegengesetzt zu der als Sensorelement dienenden Solarzelle (1) orientierte weitere Solarzelle (2) ist, die mit der als Sensorelement dienenden Solarzelle (1) einen Solarzellenstapel bildet.

3. Messvorrichtung nach Anspruch 1 oder 2,
**dadurch gekennzeichnet,**
**dass** die Messelektronik (4, 5) so ausgebildet ist, dass sie durch Auswahl jeweils einer Verbindungsleitung (9) einer Zeile (a, b, c, d) und einer Verbindungsleitung einer Spalte (A, B, C, D) eine Spannung an die als Sensorelement dienende Solarzelle (1) einer Sensoreinheit anlegen und einen Strom durch diese Solarzelle messen kann.

4. Messvorrichtung nach Anspruch 3,
**dadurch gekennzeichnet,**
**dass** die Messelektronik (4, 5) so ausgebildet ist, dass sie die Ströme durch alle als Sensorelemente dienenden Solarzellen (1) der Sensoranordnung nacheinander misst.

5. Messvorrichtung nach Anspruch 3,
**dadurch gekennzeichnet,**
**dass** die Messelektronik (4, 5) ein Mehrkanalmesssystem aufweist und so ausgebildet ist, dass sie die Ströme durch die als Sensorelemente dienenden Solarzellen (1) jeweils einer Zeile (a, b, c, d) oder Spalte (A, B, C, D) der Sensoranordnung gleichzeitig misst.

6. Messvorrichtung nach Anspruch 3,
**dadurch gekennzeichnet,**
**dass** die Messelektronik (4, 5) so ausgebildet ist, dass sie die Ströme durch die als Sensorelemente dienenden Solarzellen (1) der Sensoranordnung durch Nutzung von Anregungsspannungen unterschiedlicher Frequenzmodulation für die einzelnen Solarzellen (1) gleichzeitig misst.

7. Messvorrichtung nach einem der Ansprüche 1 bis 6,
**dadurch gekennzeichnet,**
**dass** die Messelektronik (4, 5) so ausgebildet ist, dass sie jeweils eine Strom-Spannungs-Charakteristik der als Sensorelemente dienenden Solarzellen (1) der Sensoranordnung misst.

8. Messvorrichtung nach einem der Ansprüche 1 bis 7,
**dadurch gekennzeichnet,**
**dass** sie eine Datenauswerteeinrichtung (6) umfasst, die mit der Messelektronik (4, 5) verbunden ist und die aus von der Messelektronik (4, 5) gemessenen Werten die auf jede Sensoreinheit auftreffende Lichtintensität berechnet und abspeichert und/oder ausgibt.

9. Verfahren zur Messung der Intensitätsverteilung einfallender Lichtstrahlung, insbesondere zur Vermessung der Intensitätsverteilung eines Sonnensimulators für Solarzellen oder Solarmodule, mit einer Messvorrichtung nach einem der Ansprüche 1 bis 8, bei dem
- die Sensoranordnung der Messvorrichtung mit der zu vermessenden Lichtstrahlung beleuchtet wird,
- die durch die als Sensorelemente dienenden Solarzellen (1) der Sensoreinheiten fließenden Ströme bei einer oder mehreren Spannungen mit der Messelektronik (4, 5) gemessen werden und
- die auf jede Sensoreinheit der Sensoranordnung auftreffende Lichtintensität aus von der Messelektronik (4, 5) gemessenen Werten berechnet wird,
wobei für die Berechnung der auf eine Sensoreinheit auftreffenden Lichtintensität jeweils ein Normwert berücksichtigt wird, der vorab für jede Sensoreinheit durch Beleuchtung der Sensoranordnung mit Lichtstrahlung einer bekannten Intensitätsverteilung ermittelt wurde.

10. Verfahren nach Anspruch 9 zur Vermessung der Homogenität eines optisch transparenten Objekts, indem
- das optisch transparente Objekt über der Sensoranordnung angeordnet,
- die Sensoranordnung mit Lichtstrahlung einer bekannten Intensitätsverteilung durch das Objekt hindurch beleuchtet,
- die Intensitätsverteilung der auf die Sensoranordnung auftreffenden Lichtstrahlung gemessen und
- durch Vergleich mit der bekannten Intensitätsverteilung die optische Homogenität des Objekts ermittelt wird.

## Claims

1. Measuring apparatus for measuring the intensity distribution of incident light radiation, with a sensor assembly consisting of multiple rows (a, b, c, d) and columns (A, B, C, D) of light-sensitive sensor units, each of which has a solar cell (1) that serves as a sensor element and one front and one rear electrical contact for applying an electrical voltage to the solar cell (1), and with an electronic measuring device (4, 5) with which a current flowing through the solar cell (1) produced by the application of an electrical voltage can be measured at each solar cell (1) that functions as a sensor element,
**characterized in that**
- each column (A, B, C, D) of the sensor assembly has an electrical connecting cable with which the front electrical contacts of the sensor units of this column are electrically connected,
- each row (a, b, c, d) of the sensor assembly has an electrical connecting cable (9) with which the rear contacts of the sensor units of this row are electrically connected,
- the electrical connecting cables of the rows (a, b, c, d) and the columns (A, B, C, D) of the sensor assembly are connected to the electronic measuring device (4, 5), and
- in each sensor unit a component (2) functioning as a diode is connected between the solar cell (1) which serves as a sensor element and the rear electrical contact in such manner that it prevents a current flow from the solar cell (1) serving as a sensor element into the electrical connecting cable (9) that is connected to the rear contacts.

2. Measuring apparatus according to Claim 1, **characterized in that** the component (2) functioning as a diode is a further solar cell (2) aligned in the opposite direction to the solar cell (1) serving as a sensor element, and forms a solar cell stack together with the solar cell (1) serving as a sensor element.

3. Measuring apparatus according to Claim 1 or 2, **characterized in that** the electronic measuring device (4, 5) is designed in such manner that upon selection of one connecting cable (9) of a row (a, b, c, d) and one connecting cable of a column (A, B, C, D) respectively it is able to apply a voltage to the solar cell (1) serving as a sensor element in a sensor unit and can measure a current passing through said solar cell.

4. Measuring apparatus according to Claim 3, **characterized in that** the electronic measuring device (4, 5) is designed in such manner that it measures the currents through all of the solar cells (1) serving as sensor elements of the sensor assembly one after the other.

5. Measuring apparatus according to Claim 3, **characterized in that** the electronic measuring device (4, 5) has a multichannel measuring system and is designed such that it measures the currents through the solar cells (1) serving as sensor elements of each row (a, b, c, d) respectively or each column (A, B, C, D) respectively of the sensor assembly simultaneously.

6. Measuring apparatus according to Claim 3, **characterized in that** the electronic measuring device (4, 5) is designed in such manner that it measures the currents through the solar cells (1) serving as sensor elements of the sensor assembly simultaneously by use of excitation voltages with different frequency modulation for the individual solar cells (1).

7. Measuring apparatus according to any one of Claims 1 to 6, **characterized in that** the electronic measuring device (4, 5) is designed in such manner that it measures a current-voltage characteristic for each of the solar cells (1) serving as sensor elements of the sensor assembly.

8. Measuring apparatus according to any one of Claims 1 to 7, **characterized in that** it comprises a data evaluation unit (6) which is connected to the electronic measuring device (4, 5) and calculates the light intensity incident on each sensor unit from values measured by the electronic measuring device (4, 5) and stores and/or outputs them.

9. Method for measuring the intensity distribution of incident light radiation, in particular for measuring the intensity distribution of a sun simulator for solar cells or solar modules, with a measuring apparatus according to any one of Claims 1 to 8, in which
- the sensor assembly of the measuring apparatus is illuminated with the light radiation that is to be measured,
- the currents flowing through the solar cells (1) serving as sensor elements of the sensor units are measured with the electronic measuring device (4, 5) at one or more voltages, and
- the intensity of the light incident on each sensor unit of the sensor assembly is calculated from values measured by the electronic measuring device (4, 5),
wherein one standard value in each case is taken into account for the calculation of the light intensity incident on a sensor unit, which standard value was determined for each sensor unit in advance by illuminating the sensor assembly with light radiation having a known intensity distribution.

10. Method according to Claim 9 for measuring the homogeneity of an optically transparent object by
- arranging the optically transparent object above the sensor assembly,
- illuminating the sensor assembly by shining light radiation having a known intensity distribution through the object,
- measuring the intensity distribution of the light radiation incident on the sensor assembly, and
- determining the optical homogeneity of the object by comparison with the known intensity distribution.

## Revendications

1. Dispositif de mesure pour mesurer la distribution d'intensité d'un rayonnement lumineux incident, comportant un dispositif de capteur constitué de plusieurs lignes (a, b, c, d) et colonnes (A, B, C, D) d'unités de capteur sensibles à la lumière, qui présentent respectivement une cellule solaire servant d'élément de capteur (1) et un contact électrique du côté avant et du côté arrière pour appliquer une tension électrique à la cellule solaire (1), et une électronique de mesure (4, 5), avec laquelle au moyen de l'application d'une tension électrique un courant circulant à travers la cellule solaire (1) sur chaque cellule solaire servant d'élément de capteur des unités de capteur peut être mesuré, **caractérisé en ce que**
- chaque colonne (A, B, C, D) du dispositif de capteur présent une ligne de liaison électrique, avec laquelle les contacts électriques du côté avant des unités de capteur de cette colonne sont reliés électriquement,
- chaque ligne (a, b, c, d) du dispositif de capteur présente une ligne de liaison électrique (9), avec laquelle les contacts du côté arrière des unités de capteur de cette ligne sont reliés électriquement,
- les lignes de liaison électrique des lignes (a, b, c, d) et des colonnes (A, B, C, D) du dispositif de capteur sont reliés avec l'électronique de mesure (4, 5), et
- dans chaque unité de capteur un composant agissant comme une diode (2) est branché entre la cellule solaire servant d'élément de capteur (1) et le contact électrique du côté arrière, de sorte qu'il empêche une circulation de courant de la cellule solaire (1) servant d'élément de capteur à la ligne de liaison électrique (9) reliée aux contacts du côté arrière.

2. Dispositif de mesure selon la revendication 1, **caractérisé en ce que** le composant agissant comme une diode (2) est une cellule solaire supplémentaire (2) orientée à l'opposé de la cellule solaire servant d'élément de capteur (1), qui forme une pile de cellules solaires avec la cellule solaire servant d'élément de capteur (1).

3. Dispositif de mesure selon la revendication 1 ou 2, **caractérisé en ce que** l'électronique de mesure (4, 5) est configuré de telle sorte qu'elle puisse au moyen de la sélection d'une ligne de liaison respective (9) d'une ligne (a, b, c, d) et d'une ligne de liaison d'une colonne (A, B, C, D) appliquer une tension à la cellule solaire servant d'élément de capteur (1) et mesurer un courant à travers cette cellule solaire.

4. Dispositif de mesure selon la revendication 3, **caractérisé en ce que** l'électronique de mesure (4, 5) est configurée de telle sorte qu'elle mesure les uns après les autres les courants à travers toutes les cellules solaires (1) servant d'élément de capteur du dispositif de capteur.

5. Dispositif de mesure selon la revendication 3, **caractérisé en ce que** l'électronique de mesure (4, 5) présente un système de mesure multicanaux et est configurée de telle sorte qu'elle mesure simultanément les courants à travers les cellules solaires (1) servant d'élément de capteur de respectivement une ligne (a, b, c, d) ou respectivement une colonne (A, B, C, D) du dispositif de capteur.

6. Dispositif de mesure selon la revendication 3, **caractérisé en ce que** l'électronique de mesure (4, 5) est configurée de telle sorte qu'elle mesure simultanément les courants à travers toutes les cellules solaires servant d'élément de capteur (1) du dispositif de capteur en utilisant les tensions d'excitation de modulations de fréquences différentes pour les cellules solaires individuelles (1).

7. Dispositif de mesure selon une des revendications 1 à 6, **caractérisé en ce que** l'électronique de mesure (4, 5) est configurée de telle sorte qu'elle mesure respectivement une caractéristique de courant-tension des cellules solaires (1) servant d'élément de capteur du dispositif de capteur.

8. Dispositif de mesure selon une des revendications 1 à 7, **caractérisé en ce que** il comprend un dispositif d'évaluation des données (6), qui est relié avec l'électronique de mesure (4, 5) et qui calcule et mémorise et/ou émet d'après les valeurs mesurées par l'électronique de mesure (4, 5) l'intensité lumineuse incidente sur chaque unité de capteur.

9. Procédé de mesure de la distribution d'intensité d'un rayonnement lumineux incident, notamment pour la mesure de la distribution d'intensité d'un simulateur solaire pour cellules solaires ou modules solaires, comportant un dispositif de mesure selon une des revendications 1 à 8, dans lequel
- le dispositif de capteur du dispositif de mesure est illuminé avec le rayonnement lumineux à mesurer,
- les courants circulant à travers les cellules solaires (1) servant d'élément de capteur des unités de capteur sont mesurés en présence d'une ou plusieurs tensions avec l'électronique de mesure (4, 5) et
- l'intensité lumineuse incidente sur chaque unité de capteur du dispositif de capteur est calculée à partir des valeurs mesurées par l'électronique de mesure (4, 5),
dans lequel pour le calcul de l'intensité lumineuse incidente sur une unité de capteur respectivement une valeur normative est prise en compte, qui a été déterminée au préalable pour chaque unité de capteur en illuminant le dispositif de capteur avec un rayonnement lumineux d'une distribution d'intensité connue.

10. Procédé selon la revendication 9 pour mesurer l'homogénéité d'un objet optique transparent, en
- disposant l'objet optique transparent au-dessus du dispositif de capteur,
- illuminant le dispositif de capteur avec un rayonnement lumineux d'une distribution d'intensité connue à travers l'objet,
- mesurant la distribution d'intensité du rayonnement lumineux incident sur le dispositif de capteur,
- déterminant l'homogénéité optique de l'objet par comparaison avec la distribution d'intensité connue.
